# DEMANDE DE BREVET EUROPEEN

(11) **EP 3 671 131 A1**
(43) Date de publication de la demande: **24.06.2020**
(21) Numéro de dépôt: 19215645.3
(22) Date de dépôt: 12.12.2019
(51) Int. Cl.: G01D 5/14

(54) **CAPTEUR D'ANGLE DIFFERENTIEL AVEC AIMANT MULTIPOLES**

(30) Priorité: 17.12.2018 FR 1873041
(71) Demandeur: SC2N, 94046 Creteil Cedex (FR)
(72) Inventeur: GUIBET, Vincent, 95892 CERGY PONTOISE (FR)
(74) Mandataire: Garcia, Christine

(57) **Abrégé**

La présente invention a pour objet un capteur d'angle destiné à détecter la position angulaire d'un élément mobile en rotation dans un moteur de véhicule automobile. Le capteur d'angle comporte au moins deux sondes sensibles au champ magnétique chacune apte à détecter les variations d'un champ magnétique généré par un aimant multipôle (1) à flux axial fixé sur l'élément mobile lorsqu'il est en rotation de façon à réaliser une mesure différentielle. Selon l'invention, le capteur d'angle comprend un élément magnétique (2) sur lequel repose l'aimant multipôle (1), l'élément magnétique (2) étant composé d'un matériau magnétique de façon à concentrer le champ magnétique en face avant de l'aimant et renforcer l'induction magnétique dans l'aimant (1).

## Description

La présente invention concerne un capteur d'angle destiné à détecter la position angulaire d'un élément mobile en rotation dans un moteur de véhicule automobile.

De tels capteurs d'angle sont utilisés dans des organes de moteurs de véhicules tels les commandes électriques de papillon (ETC) ou les vannes à recirculation de gaz (EGR) pour détecter et/ou contrôler avec précision la position angulaire d'un clapet, par exemple. D'autres applications sont également possibles.

Le capteur d'angle comporte généralement un aimant et une sonde magnétique. L'aimant présente une alternance de pôles magnétiques Nord et Sud. La rotation de l'aimant fixé sur l'élément mobile provoque une variation du champ magnétique.

La sonde magnétique est sensible au sens et à l'amplitude du champ magnétique et délivre un signal électrique fonction de l'angle de ce champ magnétique.

Dans les moteurs de véhicule, les capteurs d'angle sont amenés à être positionnés près d'un organe ou élément électrique du moteur générant un champ magnétique important tel un alternateur, un moteur ou des câbles électriques à forte intensité utilisés pour les véhicules hybrides.

Cependant, la présence de ce champ magnétique parasite se superpose au champ magnétique de l'aimant, perturbant les mesures réalisées par la sonde magnétique.

Les fabricants de véhicules exigent que la mesure du capteur d'angle ne dévie pas d'une valeur limite lorsque le capteur est exposé à un champ magnétique parasite.

Par exemple, un constructeur de commandes électriques de papillon (ETC) exige que la déviation de la mesure d'angle soit inférieure à 0,35 degrés lorsque la commande électrique de papillon (ETC) est exposée à un champ magnétique homogène de 4000 A/m à l'intérieur d'une bobine d'Helmholtz.

Il est donc nécessaire d'utiliser un aimant multipôle ayant un champ magnétique important et sans pertes de flux irréversibles

Cependant, les procédés de fabrication et plus particulièrement d'aimantation connus de ces aimants ne permettent pas d'obtenir un aimant ayant un champ magnétique optimisé.

En effet, classiquement, pour magnétiser l'aimant, une tête de magnétiseur à quatre bobines est placée devant l'aimant.

Les bobines doivent être petites si le diamètre de l'aimant est petit. De plus, les aimants composés de terres rares ont besoin d'une grande énergie pour être saturés.

Il est difficile, voire impossible, d'atteindre la saturation si l'aimant est petit. Par exemple, avec un anneau magnétique de 14 mm de diamètre extérieur et de 3,5 mm de hauteur, seuls les premiers 1,5 mm de la surface supérieure de l'aimant sont saturés.

Par conséquent, le champ magnétique résultant généré par l'aimant n'est pas optimisé et des pertes de flux irréversibles risquent de se produire.

Il est connu d'utiliser un capteur d'angle comprenant un aimant à flux magnétique axial en combinaison avec deux sondes à effet Hall pour réaliser une mesure différentielle, réduisant l'impact du champ magnétique parasite sur la mesure d'angle. Le champ magnétique est sensiblement parallèle à l'axe principal de l'aimant.

La mise en œuvre d'une sonde à effet Hall pour former un capteur différentiel est décrite dans le document EP0363512, à titre d'exemple.

L'invention a donc pour objectif de pallier à ces inconvénients de l'art antérieur en proposant un capteur d'angle pour moteur de véhicule insensible à un champ magnétique externe parasite de façon à fournir une mesure d'angle plus fiable.

L'invention concerne un capteur d'angle destiné à détecter la position angulaire d'un élément mobile en rotation dans un moteur de véhicule automobile.

Le capteur d'angle comportant deux sondes sensibles au champ magnétique chacune apte à détecter les variations d'un champ magnétique généré par un aimant multipôle à flux axial fixé sur l'élément mobile lorsqu'il est en rotation de façon à réaliser une mesure différentielle.

Selon l'invention, le capteur d'angle comprend un élément magnétique sur lequel repose l'aimant multipôle. L'élément magnétique est composé d'un matériau magnétique permettant de concentrer le champ magnétique en face avant de l'aimant et de renforcer l'induction magnétique dans l'aimant.

L'aimant multipôle et l'élément magnétique présentent une forme cylindrique.

L'élément magnétique et l'aimant multipôle sont logés dans une cavité formée dans un support. L'élément magnétique et l'aimant multipôle sont maintenus dans la cavité au moyen d'une bordure de blocage délimitant la cavité. Le support est destiné à être fixé sur l'élément mobile du moteur.

L'élément magnétique est positionné entre l'aimant multipôle et le support. L'élément magnétique comprend une première face en contact avec une face axiale interne de l'aimant multipôle et une deuxième face en contact avec une face de contact du support.

Les sondes sensibles au champ magnétique sont des sondes à effet Hall.

Les deux sondes sensibles au champ magnétique sont positionnées en regard d'une face axiale externe de l'aimant multipôle.

L'invention fournit ainsi un capteur d'angle pour moteur de véhicule insensible à un champ magnétique externe parasite provoqué par la proximité d'un organe ou d'un élément électrique du moteur générant un champ magnétique important tel un alternateur, un moteur ou des câbles électriques à forte intensité utilisés pour les véhicules hybrides.

L'invention permet de fournir une mesure d'angle fiable.

Le champ magnétique axial, localisé devant les sondes à effet Hall, est renforcé.

Alternativement, pour une même valeur de champ magnétique, l'invention permet d'utiliser un aimant multipôle d'épaisseur plus faible dans le capteur d'angle, réduisant les coûts.

La réduction de l'épaisseur de l'aimant permet aussi de faciliter la saturation de ce dernier durant le processus d'aimantation de l'aimant.

L'élément magnétique joue également un rôle de concentrateur de flux magnétique durant le procédé de magnétisation, ce qui permet de magnétiser l'aimant jusqu'à saturation.

Durant l'utilisation du capteur d'angle, l'élément magnétique renforce le champ magnétique et réduit ainsi les pertes de champ irréversibles dues au vieillissement de l'aimant.

L'invention est utilisable pour diverses formes d'aimant et de magnétisation.

Les caractéristiques de l'invention seront décrites plus en détail en se référant à :
- [Fig.1] qui est une représentation schématique d'un aimant monté dans un support selon l'art antérieur ;
- [Fig.2] qui est une représentation schématique détaillée de l'aimant multipôle ;
- [Fig.3] qui est une représentation schématique en coupe d'un aimant multipôle reposant sur un élément magnétique selon l'invention.

L'invention concerne un capteur d'angle destiné à être utilisé dans des organes de moteurs de véhicules tels les commandes électriques de papillon (ETC) ou les vannes à recirculation de gaz (EGR) pour détecter et/ou contrôler avec précision la position angulaire d'un clapet, par exemple. Le capteur d'angle comporte deux sondes sensibles au champ magnétique. Ce type de capteur d'angle est appelé capteur d'angle différentiel.

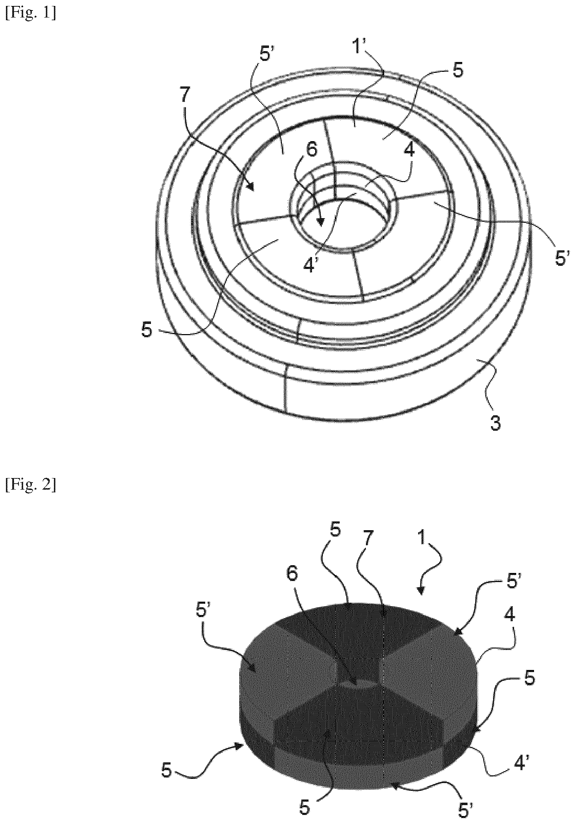

La figure 1 est une représentation schématique d'un aimant 1' de l'art antérieur.

Le capteur d'angle comprend un aimant 1' à flux axial fixé dans un support 3 de forme annulaire.

L'ensemble formé par l'aimant 1' et le support 3 est destiné à être fixé sur un élément mobile de moteur d'un véhicule tel un axe actionnant un clapet (non représenté par simplification).

Chaque sonde sensible au champ magnétique est apte à détecter les variations d'un champ magnétique générées par l'aimant 1' lorsqu'il est en rotation de façon à réaliser une mesure différentielle.

Comme illustré sur la figure 2, l'aimant dans le cadre de l'invention est un aimant multipôle 1 qui présente une alternance de pôles magnétiques Nord 5 et de pôles magnétiques Sud 5'.

La rotation de l'élément mobile du moteur entraine la rotation de l'aimant multipôle 1 et provoque une variation du champ magnétique.

Chaque sonde sensible au champ magnétique est sensible au sens et à l'amplitude du champ magnétique et délivre un signal électrique fonction du sens et de l'amplitude de ce champ magnétique. Un traitement numérique permet ensuite de calculer la position angulaire de l'aimant.

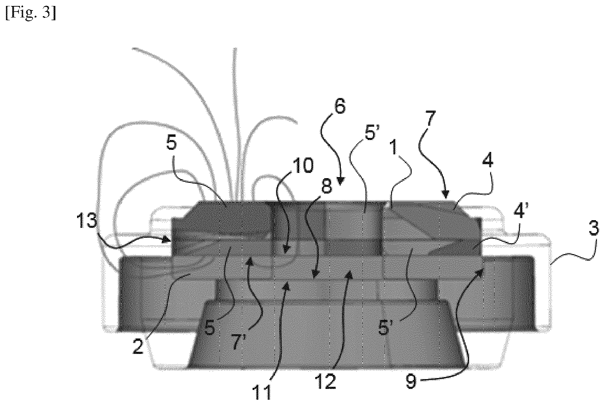

Selon l'invention, le capteur d'angle comprend un élément magnétique 2 sur lequel repose l'aimant multipôle 1, comme illustré sur la figure 3.

Par simplification, la figure 3 représente seulement un aimant multipôle 1 reposant sur un élément magnétique 2 sans les deux sondes sensibles au champ magnétique.

L'élément magnétique 2 peut être fixé à l'aimant multipôle 1.

L'élément magnétique 2 est composé d'un matériau magnétique, permettant de concentrer le champ magnétique en face avant de l'aimant et de renforcer l'induction magnétique dans l'aimant 1.

L'aimant multipôle 1 comprend deux sous-aimants multipôle 4, 4' superposés comportant chacun au moins quatre pôles magnétiques 5, 5' alternés dont deux pôles Nord 5 et deux pôles Sud 5'.

Les pôles Sud 5' d'un premier sous-aimant multipôle 4 sont alignés avec les pôles Nord 5 d'un deuxième sous-aimant multipôle 4'.

Le nombre de pôles magnétiques 5, 5' peut être différent, comme égal à six par exemple.

L'aimant multipôle 1 et l'élément magnétique 2 présentent une forme cylindrique. Dans l'exemple de la figure 3, ils présentent une forme annulaire avec un orifice central.

En variante, l'élément magnétique 2 peut être plein, sans orifice central. Les pôles magnétiques 5, 5' présentent une forme générale de triangle. D'autres formes sont également possibles comme des formes quadrilatérales. L'aimant multipôle 1 comprend un orifice central 6. L'aimant multipôle 1 peut être composé de ferrite ou de terres rares. L'aimant multipôle 1 peut être obtenu par frittage, injection ou compression. L'élément magnétique 2 est en fer doux ou acier doux

Les sondes sensibles au champ magnétique peuvent être des sondes à effet Hall ou des sondes à magnétorésistance anisotrope (MRA), par exemple.

L'aimant multipôle 1 comprend une face axiale externe 7 et une face axiale interne 7'.

Les deux sondes sensibles au champ magnétique peuvent être positionnées en regard de la face axiale externe 7 de l'aimant multipôle 1.

En variantes, les deux sondes à effet Hall peuvent être opposées l'une par rapport à l'autre et séparées par l'aimant multipôle 1.

Une sonde à effet Hall est alors positionnée en regard de la face axiale externe 7 de l'aimant multipôle 1 et l'autre sonde est positionnée en regard de l'élément magnétique 2.

L'élément magnétique 2 est positionné entre l'aimant multipôle 1 et une face de contact 8 du support 3. L'élément magnétique 2 est en forme de disque dans cet exemple.

L'élément magnétique 2 comprend une première face 10 en contact avec la face axiale interne 7' de l'aimant multipôle 1 et une deuxième face 11 en contact avec la face de contact 8 du support 3.

L'élément magnétique 2 et l'aimant multipôle 1 sont logés dans une cavité 12 formée dans le support 3 cylindrique.

L'ensemble magnétique formé par l'élément magnétique 2 et l'aimant multipôle 1 comprend une surface périphérique 13 bloquée par une bordure de blocage 9 circulaire du support 3. L'ensemble magnétique est alors bloqué dans la cavité 12 du support 3. L'élément magnétique 2 et l'aimant multipôle 1 présentent le même diamètre.

## Revendications

1. Capteur d'angle destiné à détecter la position angulaire d'un élément mobile en rotation dans un moteur de véhicule automobile, ledit capteur d'angle comportant au moins deux sondes sensibles au champ magnétique chacune apte à détecter les variations d'un champ magnétique généré par un aimant multipôle (1) à flux axial fixé sur l'élément mobile lorsqu'il est en rotation de façon à réaliser une mesure différentielle,
**caractérisé en ce qu'**il comprend : un élément magnétique (2) sur lequel repose l'aimant multipôle (1), l'élément magnétique (2) étant composé d'un matériau magnétique de façon à concentrer le champ magnétique en face avant de l'aimant et renforcer l'induction magnétique dans l'aimant (1).

2. Capteur d'angle selon la revendication 1, **caractérisé en ce que** l'aimant multipôle (1) et l'élément magnétique (2) présentent une forme cylindrique.

3. Capteur d'angle (1) selon l'une quelconque des revendications 1 ou 2, **caractérisé en ce que** l'élément magnétique (2) et l'aimant multipôle (1) sont logés dans une cavité (12) formée dans un support (3), l'élément magnétique (2) et l'aimant multipôle (1) étant maintenus dans la cavité (12) au moyen d'une bordure de blocage (9) délimitant la cavité (12), ledit support (3) étant destiné à être fixé sur l'élément mobile du moteur.

4. Capteur d'angle selon la revendication 3, **caractérisé en ce que** l'élément magnétique (2) est positionné entre l'aimant multipôle (1) et le support (3), l'élément magnétique (2) comprenant une première face (10) en contact avec une face axiale interne (7') de l'aimant multipôle (1) et une deuxième face (11) en contact avec une face de contact (8) du support (3).

5. Capteur d'angle selon l'une quelconque des revendications 1 à 4, **caractérisé en ce que** les sondes sensibles au champ magnétique sont des sondes à effet Hall.

6. Capteur d'angle selon la revendication 5, **caractérisé en ce que** les deux sondes sensibles au champ magnétique sont positionnées en regard d'une face axiale externe (7) de l'aimant multipôle (1).
